(19) Europäisches Patentamt
European Patent Office
Office européen des brevets

(11) Veröffentlichungsnummer: **0 043 495**
**B1**

(12) # EUROPÄISCHE PATENTSCHRIFT

(45) Veröffentlichungstag der Patentschrift: **16.03.83**

(51) Int. Cl.³: **E 21 B 43/22**, C 09 K 7/02

(21) Anmeldenummer: **81104855.2**

(22) Anmeldetag: **23.06.81**

(54) **Verwendung von Gemischen von Betainen oder Aminoxiden und Polyoxyäthylenestern von Naphthensäuren bei der Erdölförderung.**

(30) Priorität: **04.07.80 DE 3025383**

(43) Veröffentlichungstag der Anmeldung: **13.01.82 Patentblatt 82/2**

(45) Bekanntmachung des Hinweises auf die Patenterteilung: **16.03.83 Patentblatt 83/11**

(84) Benannte Vertragsstaaten: **AT BE CH DE FR GB IT LI LU NL SE**

(56) Entgegenhaltungen:
**BE-A-626 505**
**DE-A-2 532 469**
**DE-A-2 736 408**
**DE-A-2 831 100**
**GB-A-1 431 006**
**GB-A-2 001 377**
**US-A-4 008 165**
**US-A-4 090 969**

(73) Patentinhaber: **Th. Goldschmidt AG, Goldschmidtstrasse 100, D-4300 Essen (DE)**

(72) Erfinder: **Wagner, Helmut, Dr., Bachstrasse 2, D-6834 Ketsch (DE)**

**EP 0 043 495 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verwendung von Gemischen von Betainen oder Aminoxiden und Polyoxyäthylenestern von Naphthensäuren bei der Erdölförderung

Bei der Erdölförderung, insbesondere der sekundären und tertiären Erdölförderung, spielen grenzflächenaktive Substanzen eine wesentliche Rolle. Die hierbei in erster Linie verwendeten Petroleumsulfonate haben den Vorteil des niedrigen Preises, jedoch den Nachteil ihrer Empfindlichkeit gegenüber insbesondere mehrwertigen Kationen. So sind die Calcium- und Magnesiumsalze dieser Verbindungen nicht mehr wasserlöslich und lösen sich bevorzugt in der Ölphase. Da aber Erdöl- und Salzlagerstätten häufig zusammen anzutreffen sind und das in der Lagerstätte befindliche Wasser einen hohen Elektrolytgehalt aufweist, sind die vorerwähnten billigen Sulfonate nur innerhalb dieser durch ihre Löslichkeit gegebenen Grenzen anwendbar.

Man hat auch bereits kationaktive, grenzflächenaktive Substanzen verwendet, wie z.B. quaternäre Ammoniumsalze, Derivate von Fettaminen, Polyamine. Diese Verbindungen haben aber wiederum den Nachteil der Substantivität auf insbesondere silikatischem Gestein. Sie verlieren bei der Absorption ihre Wirksamkeit.

Die bekannten nichtionogenen, grenzflächenaktiven Substanzen haben zwar den Vorteil der relativen Unempfindlichkeit gegenüber Elektrolyten, wenngleich durch Elektrolyte ihre Löslichkeit in Wasser ebenfalls herabgesetzt wird, und zeigen nicht die ausgeprägte Substantivität der kationaktiven Verbindungen. Diese Verbindungsklasse, insbesondere die Anlagerungsprodukte des Äthylenoxids an Verbindungen mit aktivem Wasserstoff, ist jedoch relativ teuer, hat begrenzte Wirksamkeit und beeinträchtigt zudem die Dismulgierung der geförderten Öl/Wasser-Emulsion.

Ausführliche Literatur über die bisher verwendeten wichtigsten grenzflächenaktiven Substanzen kann der Enzyklopädie der technischen Chemie von Ullmann, 6. Band, S. 568 ff., entnommen werden.

Zu den charakteristischen Eigenschaften nichtionogener Tenside gehört die Ausbildung sogenannter Entmischungs- oder Trübungspunkte (cloud points), die als Temperaturbereiche einer mit freiem Auge sichtbaren Phasentrennung (Entmischung bis Flockung) angesehen werden können. Diese Erscheinung hat u.a. ihre Ursache in der Ausbildung von Riesenmicellen und dem Erreichen von temperaturabhängigen Löslichkeitsgrenzen. Da die Löslichkeit nichtionogener Tenside der allgemeinen Ansicht nach in erster Linie von der Hydratation der Äthoxygruppen bestimmt wird, führt Temperaturanstieg zu partieller Dehydratation, die schliesslich in Phasentrennung endet.

Die Lage der Trübungspunkte nichtionogener Tenside ist nur wenig von der Wirkstoffkonzentration abhängig, wird jedoch z.B. durch Elektrolyte stark beeinflusst, nämlich herabgesetzt.

Da bei den meisten Öllagerstätten die Feldtemperatur weit oberhalb des Trübungspunktes von nichtionogenen Tensiden liegt, und ausserdem die Verwendung relativ hochmolekularer, HLBgerechter Produkte aufgrund der Löslichkeitsgrenzen stark eingeengt wird, können rein nichtionogene Tenside nur bedingt eingesetzt werden, denn bei der Temperatur des Trübungspunktes (Entmischungstemperatur) trennt sich die Tensidlösung in unstöchiometrisch zusammengesetzte tensidreiche bzw. tensidarme Mischphasen. Dadurch geht aber die für eine richtige HLB-Einstellung erforderliche Stoffaufteilung zwischen Wasser- und Ölphase verloren. Darüber hinaus besteht die Möglichkeit, dass die Eigensolubilisierung der Tenside in den Phasen nicht mehr ausreicht und in der Folge Flockung eintritt. Die verbleibende Resttensidmenge reicht dann für die Grenzflächenspannungserniedrigung nicht mehr aus.

Solubilisierte Kohlenwasserstoffe können in Abhängigkeit von der chemischen Struktur Trübungspunkte sowohl erhöhen als auch erniedrigen.

Es ist bekannt, das ein Gemisch zweier nichtionogener Tenside einen Trübungspunkt aufweist, der ungefähr dem Mittelwert der Trübungspunkte der Ausgangstenside entspricht.

Bei der Kombination nichtionogener mit ionogenen Tensiden wird allgemein die Lage des Trübungspunktes angehoben. Beide beschriebenen Effekte beruhen auf der Bildung von Mischmicellen.

Aus der DE-C 25 32 469 ist die Verwendung grenzflächenaktiver Betaine bekannt, welche als hydrophilen Rest mindestens eine quaternäre Ammoniumgruppe, die intramolekular mit einer Säuregruppe, vorzugsweise mit einer Carboxylgruppe, zur inneren Salzbildung befähigt ist, und als oleophilen Rest mindestens einen von den Naphthensäuren abgeleiteten Rest aufweist, bei der Erdölgewinnung.

Unter Naphthensäuren sind dabei die in den Rohölen durch Extraktion mit Lauge und nachfolgendem Ansäuern erhaltenen natürlichen Säuren zu verstehen. Es handelt sich dabei um Gemische, in denen alkylierte Cyclopentan- und Cyclohexancarbonsäuren überwiegen («Erdöllexikon», Dr. Alfred Hüthig, Verlag Heidelberg S. 192).

Beispiele für derartig zu verwendende Betaine lassen sich durch die Formel I zeigen:

$$R^1\text{-NH-}R^2\text{-}\overset{\displaystyle R^4}{\underset{\displaystyle R^3}{\overset{|}{\underset{|}{N^{\oplus}}}}}\text{-}R^5\text{-COO}^{\ominus}$$

worin $R^1$ der von den Naphthensäuren hergeleitete Säurerest ist; $R^2$ ist ein Alkylenrest mit 2 bis 6 C-Atomen, $R^3$ und $R^4$ sind gleich oder verschieden und bedeuten vorzugsweise einen niederen

Alkylrest, insbesondere einen geradkettigen Alkylrest mit 1 bis 4 C-Atomen, und $R^5$ ist ein Alkylenrest mit vorzugsweise 1 bis 3 C-Atomen.

Ein weiteres Beispiel entspricht folgender Struktur:

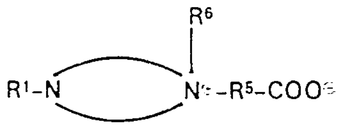

Hierbei sind die beiden Stickstoffatome Bestandteile eines heterocyclischen Ringes, z.B. des Piperazins. $R^6$ entspricht in seiner Bedeutung dem Rest $R^3$ oder $R^4$ der Formel I. Die Reste $R^1$ und $R^5$ haben die vorgenannte Bedeutung. Es ist dem Fachmann klar, dass an dem tertiären Stickstoffatom unter Quaternierungsbedingungen eine weitere, gegebenenfalls durch eine Alkylengruppe vom Stickstoff getrennte Carboxylgruppe eingeführt werden kann.

Als noch wirksamer als die vorgenannten Carboxybetaine haben sich die entsprechenden Sulfobetaine erwiesen. Verfahren zur Herstellung derartiger Sulfobetaine sind in der DE-A 27 36 408 beschrieben. Die Sulfobetaine entsprechen dabei der allgemeinen Formel

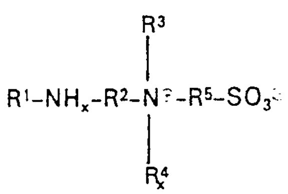

worin
$R^1$ der Naphthenoylrest,
$R^2$ ein Alkylenrest mit 2 bis 6 Kohlenstoffatomen ist,
$R^3$ und $R^4$ gleich oder verschieden sind und geradkettige Alkylreste mit 1 bis 4 Kohlenstoffatomen bedeuten,
$R^5$ ein Alkylenrest mit 1 bis 4 Kohlenstoffatomen ist,
x den Wert 1 oder 0 hat, wobei, wenn x = 0 ist, das quaternäre Stickstoffatom über eine weitere Gruppe $R^2$ unter Ringbildung mit dem ersten Stickstoffatom verbunden ist und in diesem Falle $R^2$ eine Alkylengruppe mit 2 Kohlenstoffatomen ist.

Im Verlauf der weiteren Untersuchung von Naphthensäurederivaten für die Zwecke der tertiären Erdölförderung hat sich gezeigt, dass auch entsprechende Aminoxide, welche einen Naphthenoylrest enthalten, ausserordentlich wirksame Verbindungen sind. Sie erniedrigen bereits in sehr geringen Konzentrationen die Grenzflächenspannung zwischen Erdöl und Wasser.

In einem noch nicht zum Stand der Technik gehörenden Verfahren ist die Herstellung von Aminoxiden der allgemeinen Formel

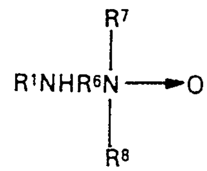

wobei
$R^1$ der Naphthenoylrest,
$R^6$ ein Alkylenrest mit 2 bis 5 Kohlenstoffatomen,
$R^7$, $R^8$ gleich oder verschieden und ein Methyl- oder Äthylrest sind

sowie ihre Verwendung für die tertiäre Erdölförderung beansprucht.

Es ist dem Fachmann bekannt, dass die Beeinflussung der Grenzfläche Öl/Wasser dann ihr Maximum erreicht, wenn die Affinität der grenzflächenaktiven Verbindung in einem ausgewogenen Verhältnis zur öligen und zur wässrigen Phase vorliegt. Ist die Verbindung zu hydrophil, reichert sie sich insbesondere in der wässrigen Phase an; ist sie zu hydrophob, löst sie sich insbesondere in der öligen Phase. Diese hydrophob/hydrophil- bzw. hydrophil/lipophil-Balance kann durch den bekannten HLB-Wert ausgedrückt werden.

Bei den vorgenannten Carboxy- oder Sulfobetainen und den Aminoxiden auf Naphthensäurebasis hat der Fachmann zur Steuerung des Grades der Hydrophobie die Möglichkeit, Naphthensäuren unterschiedlichen Molekulargewichtes zu verwenden, wobei man davon ausgehen kann, dass Naphthensäuren mit höherem Molekulargewicht und niedriger Säurezahl hydrophober als Naphthensäuren mit niedrigerem Molekulargewicht und grösserer Säurezahl sind. Die Beeinflussung der Hydrophobie bzw. Oleophilie über den Naphthenoylrest in den vorgenannten Verbindungen ist nur innerhalb dieser Grenzen möglich.

Der Erfindung liegt nun die Aufgabe zugrunde, Tenside bzw. Tensidkombinationen auf Naphthensäurebasis zur Verfügung zu stellen, deren hydrophil/hydrophob-Gleichgewicht besser auf das in der Lagerstätte befindliche Erdöl unter Berücksichtigung des Lagerstättenwassers eingestellt werden kann.

Erfindungsgemäss gelingt dies durch die Verwendung eines Gemisches von

a) grenzflächenaktiven Betainen, welche als hydrophilen Rest mindestens eine quaternäre Ammoniumgruppe aufweisen, die intramolekular zur Salzbildung mit einer Carboxylgruppe oder Sulfosäuregruppe befähigt ist, und als oleophilen Rest mindestens einen von den Naphthensäuren abgeleiteten Rest aufweisen oder von Aminoxiden der allgemeinen Formel

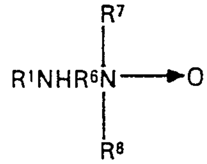

wobei
$R^1$ der Naphthenoylrest,
$R^6$ ein Alkylenrest mit 2 bis 5 Kohlenstoffatomen,
$R^7$, $R^8$ gleich oder verschieden und ein Methyl- oder Äthylrest sind, und

b) Polyoxyäthylenestern von Naphthensäuren mit einem Molgewicht des Esters von 500-3000 im Gewichtsverhältnis von a):b) = 10:90 bis 90:10 als Tenside für die tertiäre Erdölförderung.

Durch die Kombination von nichtionogenen Naphthensäurepolyglykolestern mit Amphotensiden oder Aminoxiden auf Naphthensäurebasis werden die Trübungspunkte sehr stark in Richtung höherer Temperaturen verschoben, bei gleichzeitig wesentlich verbesserter Unempfindlichkeit der Tensidlösungen gegenüber hohen Salzkonzentrationen.

Dies ist bedeutungsvoll für den Einsatz solcher Produkte im Rahmen tertiärer Massnahmen zur Rohölförderung, speziell für Verfahren der Rohölmobilisierung durch Einstellung extrem niedriger Grenzflächenspannungen (low tension flooding).

Die vorgegebenen, häufig variierenden Lagerstättenverhältnisse (Temperatur, Druck, Salinität des Lagerstättenwassers, Rohölzusammensetzung, Porosität und Kapillarität der Gesteinsformation, mineralogische Beschaffenheit der Lagerstättengesteine und viele andere Faktoren) machen es in der Praxis erforderlich, die Tensideigenschaften steuern zu können.

Extrem niedrige Grenzflächenspannungen zwischen Rohöl/Lagerstättenwasser werden nur dann erreicht, wenn das verwendete Tensid der HLB-Vorstellung entsprechend dem System angepasst werden kann. Dabei entspricht einer bestimmten HLB-Einstellung ein festgelegtes Verhältnis der Löslichkeiten des Tensids in der wässrigen und in der Ölphase. Dies setzt einigermassen konstante Verhältnisse der Tensidlöslichkeit in Abhängigkeit von Temperatur und Salzgehalt des Lagerstättenwassers voraus.

Es ist somit ein besonderer Vorteil des Erfindungsgegenstandes, dass es möglich ist, das Gleichgewicht in bezug auf Hydrophobie und Hydrophilie der Komponenten auf mehrfache Weise einzustellen. So kann man einerseits Ester der Naphthensäuren verwenden, deren Polyoxyäthylenrest unterschiedlich gross ist. Mit steigendem Gehalt an Oxyäthylengruppen steigt die Wasserlöslichkeit und der Trübungspunkt der Gemische in den Salzlösungen. Auf der anderen Seite kann man das Verhältnis von Betainen bzw. Aminoxiden zu den nichtionogenen Verbindungen in weiten Grenzen variieren. Hierdurch ist es möglich, Gemische von grenzflächenaktiven Verbindungen auf Naphthensäurebasis zu erhalten, deren Trübungspunkt in dem jeweiligen Lagerstättenwasser oberhalb der in der Lagerstätte herrschenden Temperatur liegt. Dies ermöglicht die Einstellung des HLB-Bereiches, in dem optimale grenzflächenaktive Eigenschaften zu erwarten sind.

Die Polyoxyäthylenester der Naphthensäuren haben erfindungsgemäss ein Molekulargewicht von 500-3000. Die Verbindungen mit einem Molekulargewicht bis zu etwa 1000 werden durch die mitverwendeten Betaine bzw. Aminoxide im Lagerstättenwasser so solubilisiert, dass sie in konzentriertem Salzwasser löslich werden. In Abhängigkeit von der Temperatur der Lagerstätte wählt man den Oxäthylierungsgrad, wobei die Regel gilt, dass mit steigender Lagerstättentemperatur der Oxäthylierungsgrad steigen muss, um den gewünschten Trübungspunkt zu erreichen. Da die Verhältnisse von Lagerstätte zu Lagerstätte verschieden sind, ist es unumgänglich, von der jeweiligen Lagerstätte eine Probe des Lagerstättenwassers zu entnehmen und die Trübungspunkte verschiedener Gemische innerhalb des erfindungsgemässen Bereiches zu messen, um das Gemisch zu finden, welches einen optimalen Trübungspunkt aufweist, d.h. in der Regel einen Trübungspunkt knapp oberhalb der Temperatur der Lagerstätte. Eine solche orientierende Messung kann nach der Spinning-drop-Methode erfolgen. Dabei wird die Deformation bzw. Emulgierung oder Solubilisierung eines rotierenden Öltropfens in Salzwasser beobachtet.

Die Polyoxyäthylenester der Naphthensäuren können einen geringen Gehalt an Oxypropylengruppen aufweisen. Da diese jedoch die Hydrophilie des Polyoxyalkylenrestes erniedrigen, sollte der Gehalt gering, insbesondere < 10 Mol-% sein.

Rohöl

Für die Versuche wurde ein Rohöl mit folgenden Kenndaten verwendet:

| | |
|---|---|
| Dichte bei 20 °C: | 0,8800 g/ml |
| Dichte bei 80 °C: | 0,8488 g/ml |
| Brechungsindex $n_{20}$: | 1,5005 |
| Anilinpunkt: | 90,5 °C |
| Kinematische Viskosität bei 20 °C: | $6{,}0 \cdot 10^1\ mm^2 \cdot s^{-1}$ |
| bei 60 °C: | $1{,}93 \cdot 10^1\ mm^2 \cdot s^{-1}$ |

Lagerstättenwasser

Die Versuche wurden mit zwei verschiedenen Salzwässern durchgeführt. Wasser 1 ist ein synthetisches Lagerstättenwasser entsprechend DIN 50 900:

| | |
|---|---|
| Dichte bei 19,4 °C: | 1,0049 g/ml |
| pH bei 20 °C: | 7,1 |
| NaCl | 2,725 Gew.-% |
| $MgSO_4 \cdot 7\,H_2O$ | 0,681 Gew.-% |
| $MgCl_2 \cdot 6\,H_2O$ | 0,486 Gew.-% |
| $CaCl_2 \cdot 6\,H_2O$ | 0,233 Gew.-% |
| $NaHCO_3$ | 0,019 Gew.-% |
| Salzgehalt: | 4,144 Gew.-% |

Wasser 2 ist ein synthetisches Lagerstättenwas-

ser mit folgenden Kenndaten:

| | |
|---|---|
| Dichte bei 18,6 °C: | 1,1213 g/ml |
| pH bei 20 °C: | 6,8 |

| | mg/l | Gew.-% |
|---|---|---|
| NaCl | 165 000 | 14,73 |
| $CaCl_2 \cdot 6\,H_2O$ | 49 349 | 4,41 |
| $MgCl_2 \cdot 6\,H_2O$ | 12 810 | 1,14 |
| KCl | 750 | 0,07 |
| KBr | 400 | 0,03 |
| KJ | 20 | – |
| LiCl | 100 | 0,01 |
| $NH_4Cl$ | 350 | 0,03 |
| $SrCl_2 \cdot 6\,H_2O$ | 1 681 | 0,15 |
| $BaCl_2 \cdot 2\,H_2O$ | 58 | – |
| $NaHCO_3$ | 650 | 0,06 |
| $Na_2SO_4 \cdot 10\,H_2O$ | 680 | 0,06 |
| $NaBO_2 \cdot 4\,H_2O$ | 523 | 0,05 |
| $FeSO_4 \cdot 7\,H_2O$ | 366 | 0,03 |
| Salzgehalt | 232 738 | 20,77 |

Tenside auf Naphthensäurebasis

Als Tenside auf Naphthensäurebasis wurden folgende Verbindungen verwendet:

Polyoxyäthylennaphthensäureester

| Verbindung | Molgewicht der Naphthensäure | Molgewicht des Polyoxyäthylenrestes |
|---|---|---|
| I | 268 | 300 |
| II | 268 | 600 |
| III | 268 | 1000 |
| IV | 425 | 600 |
| V | 458 | 600 |

Carboxybetaine

A 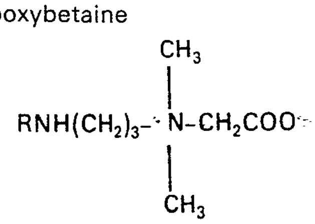 R = Naphthenoylrest

$A_1$ Molgewicht der Naphthensäure 268
$A_2$ Molgewicht der Naphthensäure 425

Sulfobetaine

B 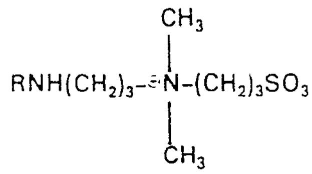

Molgewicht der Naphthensäure 268

Aminoxide

C 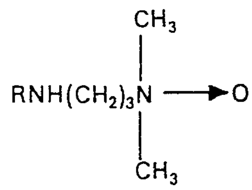

Molgewicht der Naphthensäure 268

Trübungspunkte (Entmischungspunkte) von Polyoxyäthylennaphthensäureestern in destilliertem Wasser und verschiedenen Salzwässern; Wirkstoffgehalt 1000 ppm

| Ester | destilliertes Wasser °C | Wasser 1 °C | Wasser 2 °C |
|---|---|---|---|
| I | 20–23 | 12 | – |
| II | 63 | 56 | 41 |
| III | 73 | 62 | 45 |
| IV | 59 | 44 | 31 |
| V | 55 | 40–42 | 24 |

Trübungspunkte (Entmischungspunkte) von Naphthensäurecarboxybetainen und Polyoxyäthylennaphthensäureestern in destilliertem Wasser und verschiedenen Salzwässern; Wirkstoffgehalt 1000 ppm

| Carboxybetain | Ester | Gew.-Verhältnis Gew.-% | destill. Wasser °C | Wasser 1 °C | Wasser 2 °C |
|---|---|---|---|---|---|
| $A_1$ | IV | 70/30 | – | – | 91 |
| $A_1$ | IV | 60/40 | – | – | 74 |
| $A_1$ | IV | 50/50 | – | 83 | 61 |
| $A_1$ | IV | 40/60 | – | 75 | 52 |
| $A_1$ | IV | 30/70 | über 100 | 62 | 46 |
| $A_1$ | IV | 20/80 | 77 | 53 | 41 |
| $A_1$ | IV | 10/90 | 62 | 49 | 36 |
| $A_1$ | IV | 0/100 | 59 | 44 | 31 |

Trübungspunkte (Entmischungspunkte) von Naphthensäurecarboxybetainen und Polyoxyäthylennaphthensäureestern in verschiedenen Salzwässern; Wirkstoffgehalt 1000 ppm

| Carboxybetain | Ester | Gew.-Verhältnis Gew.-% | Wasser 1 °C | Wasser 2 °C |
|---|---|---|---|---|
| $A_1$ | V | 70/30 | - | 89 |
| $A_1$ | V | 60/40 | - | 78 |
| $A_1$ | V | 50/50 | 84 | 64 |
| $A_1$ | V | 40/60 | 75 | 51 |
| $A_1$ | V | 30/70 | 68 | 37 |
| $A_1$ | V | 20/80 | 60 | 31 |
| $A_1$ | V | 10/90 | 52 | 27 |
| $A_1$ | V | 0/100 | 40-42 | 24 |

Trübungspunkte (Entmischungspunkte) von Naphthensäuresulfobetainen und Polyoxyäthylennaphthensäureestern in Salzwasser nach DIN 50 900 (Wasser 1); Wirkstoffgehalt 1000 ppm

| Sulfobetain | Ester | Gew.-Verhältnis Gew.-% | Wasser 1 °C |
|---|---|---|---|
| B | IV | 60/40 | 92 |
| B | IV | 50/50 | 81 |
| B | IV | 40/60 | 71 |
| B | IV | 30/70 | 61 |
| B | IV | 20/80 | 52 |
| B | IV | 10/90 | 47 |
| B | IV | 0/100 | 44 |

Trübungspunkte (Entmischungspunkte) von Naphthensäureamidaminoxid und Polyoxyäthylennaphthensäureestern in verschiedenen Salzwässern; Wirkstoffgehalt 1000 ppm

| Aminoxid | Ester | Gew.-Verhältnis Gew.-% | Wasser 1 °C | Wasser 2 °C |
|---|---|---|---|---|
| C | V | 80/20 | - | 72 |
| C | V | 70/30 | 87 | 66 |
| C | V | 60/40 | 77 | 60 |
| C | V | 50/50 | 68 | 54 |
| C | V | 40/60 | 59 | 48 |
| C | V | 30/70 | 52 | 42 |
| C | V | 20/80 | 45 | 36 |
| C | V | 10/90 | 41 | 30 |
| C | V | 0/100 | 40-42 | 24 |

Grenzflächenspannungswerte in $mN^2$ als Funktion der Temperatur (gemessen mit der Spinning-drop-Methode)
Grenzfläche: Rohöl/Wasser 1
Tensidkonzentration: 1000 ppm

| Temperatur °C | Tensid-gemisch | Gew.-% 0/100 | 25/75 |
|---|---|---|---|
| 30 | $A_2$/IV | $\approx 10^{-1}$ | - |
| 40 | $A_2$/IV | $\approx 10^{-1}$ | - |
| 50 | $A_2$/IV | $\approx 10^{-1}$ | - |
| 60 | $A_2$/IV | $\approx 10^{-1}$ | $4{,}5 \cdot 10^{-2}$ |
| 70 | $A_2$/IV | $2{,}2 \cdot 10^{-2}$ | $1{,}7 \cdot 10^{-2}$ |
| 80 | $A_2$/IV | $3{,}3 \cdot 10^{-2}$ | $1{,}5 \cdot 10^{-2}$ |
| 90 | $A_2$/IV | - | $1{,}7 \cdot 10^{-2}$ |

| Temperatur °C | Tensidgemisch | Gew.-% 0/100 | 10/90 | 23/77 | 25/75 | 27/73 |
|---|---|---|---|---|---|---|
| 30 | $A_1$/IV | $\geqq 10^{-1}$ | $\geqq 10^{-1}$ | $\geqq 10^{-1}$ | $3{,}0 \cdot 10^{-3}$ | $6{,}0 \cdot 10^{-3}$ |
| 40 | $A_1$/IV | $\geqq 10^{-1}$ | $\geqq 10^{-1}$ | $\geqq 10^{-1}$ | $5{,}7 \cdot 10^{-3}$ | $1{,}5 \cdot 10^{-2}$ |
| 50 | $A_1$/IV | $\geqq 10^{-1}$ | $\geqq 10^{-1}$ | $1{,}8 \cdot 10^{-2}$ | $2{,}5 \cdot 10^{-3}$ | $1{,}2 \cdot 10^{-2}$ |
| 60 | $A_1$/IV | $\sim 10^{-1}$ | $\sim 10^{-1}$ | $\sim 10^{-1}$ | $\sim 10^{-1}$ | $\sim 10^{-1}$ |
| 70 | $A_1$/IV | $2{,}2 \cdot 10^{-2}$ | $7{,}1 \cdot 10^{-3}$ | $\geqq 10^{-1}$ | $4{,}2 \cdot 10^{-2}$ | $\sim 10^{-1}$ |
| 80 | $A_1$/IV | $3{,}3 \cdot 10^{-2}$ | $8{,}5 \cdot 10^{-3}$ | $1{,}8 \cdot 10^{-2}$ | $1{,}2 \cdot 10^{-2}$ | $\sim 10^{-1}$ |
| 90 | $A_1$/IV | – | – | $\sim 10^{-2}$ | $1{,}7 \cdot 10^{-2}$ | $\sim 10^{-1}$ |

| Temperatur °C | Tensid-gemisch | Gew.-% 20/80 | 25/75 |
|---|---|---|---|
| 30 | B/IV | $3{,}8 \cdot 10^{-2}$ | $\sim 10^{-1}$ |
| 40 | B/IV | $\geqq 10^{-1}$ | $\sim 10^{-1}$ |
| 50 | B/IV | $\geqq 10^{-1}$ | $\geqq 10^{-1}$ |
| 60 | B/IV | $\geqq 10^{-1}$ | $\geqq 10^{-1}$ |
| 70 | B/IV | $1{,}6 \cdot 10^{-2}$ | $\sim 10^{-1}$ |
| 80 | B/IV | $1{,}5 \cdot 10^{-2}$ | $6{,}4 \cdot 10^{-3}$ |
| 90 | B/IV | $3{,}0 \cdot 10^{-2}$ | $4{,}5 \cdot 10^{-2}$ |

| Temperatur °C | Tensid-gemisch | Gew.-% 25/75 | 23/77 |
|---|---|---|---|
| 30 | C/V | $7{,}0 \cdot 10^{-4}$ | $6{,}7 \cdot 10^{-3}$ |
| 40 | C/V | $1{,}1 \cdot 10^{-2}$ | $2{,}4 \cdot 10^{-2}$ |
| 50 | C/V | $\sim 10^{-1}$ | $\sim 10^{-1}$ |
| 60 | C/V | $\sim 10^{-1}$ | $\sim 10^{-1}$ |
| 70 | C/V | $2{,}9 \cdot 10^{-2}$ | $2{,}5 \cdot 10^{-2}$ |
| 80 | C/V | $8{,}5 \cdot 10^{-3}$ | $< 10^{-4}$ |
| 90 | C/V | $8{,}6 \cdot 10^{-3}$ | $1{,}5 \cdot 10^{-2}$ |

Die Messergebnisse zeigen, dass erwartungsgemäss die Entmischungstemperaturen der wässrigen Lösungen von Naphthensäurepolyglykolestern durch den Zusatz von Naphthensäurecarboxy- oder Naphthensäuresulfobetainen sowie Naphthensäureaminoxiden nicht linear in Richtung höherer Temperaturen verschoben werden. Damit verbunden ist in allen Fällen eine wesentliche Erhöhung der Stabilität der Tensidlösungen gegenüber Flockung. Beide Effekte sind wichtige Voraussetzungen für die Praxis.

Die Beispiele verdeutlichen anhand von Spinning-drop-Messergebnissen die Wichtigkeit optimaler HLB-Einstellung zur Erzielung extremer Grenzflächenspannungswerte. Für langzeitige Tensidwirksamkeit innerhalb des Bereiches besonderer Systemeigenschaften ist unter anderem eine Konstanz der stofflichen Verteilung der Wirkstoffe zwischen Öl- und Wasserphase eine Grundlage.

Deshalb werden unter den vielen Möglichkeiten der Formulierung der Tensidzusammensetzung jene den Vorrang geniessen, deren Entmischungstemperatur in oder knapp oberhalb der Feldtemperatur (Arbeitstemperatur) liegen.

Ob es bei einem System Rohöl/Lagerstättenwasser plus Tensid einen oder mehrere Bereiche extremer Grenzflächenspannung gibt, hängt nicht nur von den allgemeinen Systemeigenschaften, sondern vielmehr von der chemischen Struktur der Tensidwirkstoffe, ihrer absoluten Konzentration, der HLB-Einstellung und schliesslich der stofflichen Phasenaufteilung ab.

So zeigt das Beispiel mit der Tensidkombination $A_1$/IV, dass die Spinning-drop-Werte für das Mischungsverhältnis 0/100 und 10/90 erst bei Temperaturen $\geqq 60$°C, also oberhalb der Entmischungstemperatur, in den Bereich $10^{-2}$–$10^{-3}$ $mN^2$ gelangen. Eine Beobachtung der Systeme hat ergeben, dass es hier zur Bildung neuer Phasen kommt, die unter Umständen als Flüssigkristalle angesprochen werden können. Ob die Spinning-drop-Methode hierbei noch imstande ist, absolute Grenzflächenspannungswerte zu liefern, muss dahingestellt werden.

Die gleiche Tensidkombination $A_1$/IV, nun in den Mischungsverhältnissen 25/75 und 27/73, ergibt aber auch Grenzflächenspannungsminima bei <60°C, die unterhalb der Entmischungstemperatur liegen.

Ähnliche Erscheinungen sind in den Beispielen mit den Tensidkombinationen B/IV und C/V zu erkennen. In beiden Fällen existieren zwei Minimalbereiche, einmal unterhalb, einmal oberhalb der Entmischungstemperatur der betreffenden Tensidlösung. Deutlich sichtbar sind bei der Messung die Unterschiede im Phasenverhalten.

**Patentanspruch**

Verwendung eines Gemisches von

a) grenzflächenaktiven Betainen, welche als hydrophilen Rest mindestens eine quaternäre Ammoniumgruppe aufweisen, die intramolekular zur Salzbildung mit einer Carboxylgruppe oder Sulfosäuregruppe befähigt ist, und als oleophilen Rest mindestens einen von den Naphthensäuren abgeleiteten Rest aufweisen oder von Aminoxiden der allgemeinen Formel

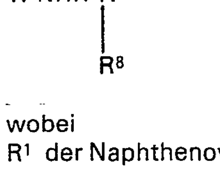

wobei

$R^1$ der Naphthenoylrest,

$R^6$ ein Alkylenrest mit 2 bis 5 Kohlenstoffatomen,

$R^7$, $R^8$ gleich oder verschieden und ein Methyl- oder Äthylrest sind, und

b) Polyoxyäthylenestern von Naphthensäuren mit einem Molgewicht des Esters von 500-3000 im Gewichtsverhältnis von a):b) = 10:90 bis 90:10 als Tenside für die tertiäre Erdölförderung.

**Claim**

Use of a mixture of

a) surface-active betaines which contain, as the hydrophilic radical, at least one quaternary ammonium group which is capable of forming an intramolecular salt with a carboxyl group or sulphonic acid group, and, as the oleophilic radical, at least one radical derived from naphthenic acids or amine oxides of the general formula

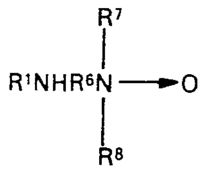

in which

$R^1$ is a naphthenoyl radical,

$R^6$ is an alkylene radical having 2 to 5 carbon atoms, and

$R^7$ and $R^8$ are identical or different and represent a methyl or ethyl radical, and

b) polyoxyethylene esters of naphthenic acids, the ester having a molecular weight of 500-3,000, in an a):b) weight ratio of 10:90 to 90:10; as surfactants for tertiary oil recovery.

**Revendication**

Application d'un mélange de:

a) bétaïnes surfactives qui présentent comme radical hydrophile au moins un groupe ammonium quaternaire qui est capable de former des sels au niveau intramoléculaire avec un groupe carboxyle ou un groupe acide sulfonique et comme radical oléophile, au moins un radical dérivé des acides naphténiques, ou oxydes d'amine de la formule générale:

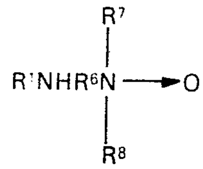

dans laquelle:

$R^1$ est le radical naphténoyle,

$R^6$ un radical alkylène de 2 à 5 atomes de carbone,

$R^7$ et $R^8$ sont semblables ou différents et sont un radical méthyle ou éthyle, et

b) d'esters de polyoxyéthylène et d'acides naphténiques, l'ester ayant un poids moléculaire de 500 à 3000, le rapport de poids a):b) étant compris entre 10:90 et 90:10, comme surfactifs pour l'extraction tertiaire du pétrole.